(19) Europäisches Patentamt
European Patent Office
Office européen des brevets

(11) **EP 1 933 517 A1**

(12) **EUROPEAN PATENT APPLICATION**

(43) Date of publication:
**18.06.2008 Bulletin 2008/25**

(51) Int Cl.:
*H04L 27/34* (2006.01)    *H04L 27/26* (2006.01)

(21) Application number: **06126030.3**

(22) Date of filing: **13.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thomson Broadcast & Multimedia S.A.**
**78700 Conflans Sainte Honorine (FR)**

(72) Inventors:
• **David, Jérôme**
  **95520, OSNY (FR)**
• **Martineau, Didier**
  **78700, CONFLANS (FR)**

(74) Representative: **Ruellan-Lemonnier, Brigitte**
  **Thomson**
  **46, quai A. Le Gallo**
  **92648 Boulogne Cedex (FR)**

(54) **PAPR reduction in an OFDM signal via an ACE technique**

(57)    The invention concerns a solution of reducing the peak to average power ratio (PAPR) in an OFDM signal. It is an object of the invention to provide a new ACE concept and apparatus, using ACE techniques with an extend gain, a periodic mask function or applied on guard subcarriers for reducing down the PAPR directly to a predetermined value.

Fig.3

## Description

The present invention is in the field of multi carrier transmission techniques in telecommunications. More particularly the invention concerns the problematic of peak to average power ratio (PAPR).

Among other multi-carrier transmission techniques, the Orthogonal Frequency division multiplexing (OFDM), serving as an example of a multi carrier modulation scheme, is frequently used.

At a transmitter, an OFDM signal is obtained from assigning a number of spectral values to be transmitted to sub-carriers used for transmission, wherein a transmit signal is obtained from an inverse Fourier transform applied to the spectral values.

The spectral values are obtained from dividing information values into groups containing a number of information values and mapping the groups of information values onto signal space constellation points in a signal space domain. Therefore a group of information values is represented by a signal space constellation point having a real part and an imaginary part. The mapping operation is equivalent to modulating the groups of information bits using a modulation technique, for example, a quadrature amplitude modulation (QAM), or a phase shift keying (PSK), assigning a group of information values to a signal space constellation point from a set of signal space constellation points associated with the modulation technique.

The analogue hardware at the transmitter requires an expensive High Power Amplifier (HPA). The high power amplifier (HPA) heavily distorts all signal parts that come close to, or exceed saturation. The distortion causes inter carrier interference (ICI). ICI disturbs the transmitted signal and degrade the bit error rate (BER). In the case of OFDM signals, high signal peaks origin from superposing the sub carriers. It causes a high peak to average power ratio (PAPR).

Thus, the main drawback of OFDM system is the high peak to average power ratio (PAPR), which significantly reduces the efficiency of the high power amplifier (HPA).

Several methods are proposed to reduce the PAPR of OFDM signals.

A standard clipping method reduces the PAPR but the transmitted signal is damaged. This method will be avoided.

A technique called active constellation extension (ACE) permits to reduce the PAPR by intelligently extending outer constellation points while keeping the interior points of the constellation. These extensions do not increase the bit error rate (BER).

An active constellation extension (ACE) technique is disclosed in IEEE Transactions on Broadcasting, vol. 49, No. 3, pp. 258-268, September 2003: "PAR reduction in OFDM via Active Constellation Extension" B. S. Krongold and D.L. Jones.

Active constellation extension allows the corner constellation points to be moved within the quarter planes outside their nominal values. The other border points are allowed to be displaced along rays pointing towards the exterior of the constellation. The interior points are not modified in order to preserve the minimum distance between the constellation symbols.

So, the outer constellation points in the signal space are extended to minimize the PAPR.

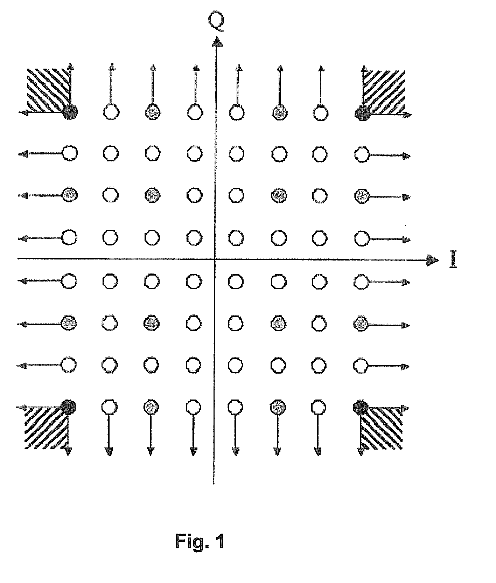

Such a constellation is represented in fig 1 for the 64-QAM constellation. The shaded regions represent corner point extension regions, and the dotted, arrowed lines represent the extension paths for side points.

Among these, the active constellation extension ACE in its POCS (projection onto convex sets) variant is a method which minimize s the PAPR. However, a low complexity solution is the smart gradient project (SGP) approaches, where only a few iterations offer valuable results. This approach is reported in the document from B. Krongold "Fast Active Constellation extension for MIMO-OFDM PAR reduction" IEEE2005. The main idea is to look at the residual clipped-off signal and project that into the space of allowable extension vectors. The result is then the peak reduction signal which is scaled by a stepwise and subtracted from the time-domain signal. This approach is not optimal as some iteration is necessary.

A transmitter using the ACE technique of the state of the art is disclose in the PCT patent application WO2005096579 and is represented by the figure 2.

The ACE transmitter comprises a data symbol source 10 coupled to an Inverse Fast Fourier Transformer (IFFT) 11. The IFFT 11 performs an inverse Fourier transform. The output of the IFFT 11 is coupled via a switch 12 to a subtractor 13, to a clipping block 14, to an ACE constraint block 15, to a Smart Gradient Project (SGP) block 16 and to the adder 17.

An output of the subtractor 13 is coupled via an FFT 18 to the ACE constraint block 15.

The FFT 18 performs a Fourier transform and filtering. The ACE constraint block 15 has an output coupled to a second IFFT 19 having an output coupled to a multiplier 20. The second IFFT 19 performs an inverse Fourier transform and oversampling. The multiplier 20 has a further input to which an output of the SGP 16 is coupled. The SGP 16 has a further input to which the output of the IFFT 19 is coupled. An output of the multiplier 20 is coupled to an input of the adder 17. An output of the adder 17 is coupled via a switch 21 to an impulse-shaping block 22.

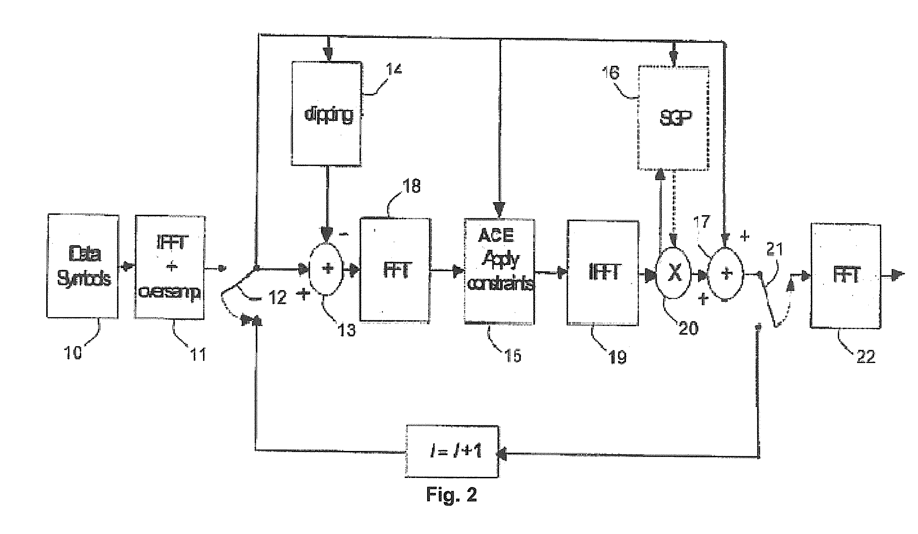

The ACE transmitter shown in Fig. 2 further comprises a feedback loop connecting the output of the adder 17 with the input of the subtractor 13, when the switches 12 and 21 are appropriately switched.

Similar to the other clipping techniques described above, the oversampled time signal provided by the IFFT 11 is clipped by the clipping block 14.

In order to allow only certain extension directions, the clipped signal is transformed into a frequency spatial domain signal using the FFT 18, where unwanted extension directions are set to zero in the ACE constraint block 15. The ACE constraint block 15 considers signals in frequency spatial domain after the signal is transformed by the FFT18. After transforming back into a time domain signal, the p-fault of the extension vector provided by the second IFFT 19 is added to the original unclipped signal.

The weighting factor p is determined by the above-mentioned smart gradient project algorithm in a sub-optimum, but computational efficient way, so that a peak reduction can be achieved. In order to reduce peaks further, the procedure can be repeated several times.

However, the repetition of this procedure indicates that the PAPR reduction will take time and will be reached progressively a determined value.

So it is an object of the invention to provide a new ACE concept and apparatus using the ACE technique for reducing down the PAPR directly to a predetermined value.

The apparatus of the invention for reducing peak to average power ration PAPR in an OFDM signal comprising subcarriers using the Active Constellation Extension ACE technique comprises:

- means for transforming the input frequency signal S1 in a first time domain signal ;
- means for first clipping with a predetermined threshold value the first time domain signal in a first clipped signal ;
- means for transforming the first clipped signal in a frequency spatial domain signal S2;
- means for determining the gain between the frequency signal S2 and the input frequency signal S1 ;
- means for projecting the exterior points of the constellation representing the frequency signal S2 in others exterior points ; and
- means for transforming back the signal to the time domain signal S3.

It is an advantage of the invention that a number of signal space constellation points contributing to a PAPR reduction can be increased.

The invention furthermore concerns a method of reducing peak to average power ration PAPR of an OFDM signal using an Active Constellation Extension ACE technique. The method comprises the steps of:

- assigning to a frequency spatial domain input signal S1 spectral values and mapping the values onto signal space constellation points ;
- determining between the points corresponding to symbols, the interior points, the exterior points and the allowable extension directions for each symbol or the region of increased margin ;
- reconstructing the time domain signal by the inverse FFT applied to each symbol and clipping with a fixed threshold the corresponding signal ;

- computing the signal in a frequency spatial domain signal S2 by applying an FFT to each clipped signal ;
- keeping all interior points to their values;
- projecting the exterior points into points of the region of increased margin with a projecting parameter.

Further embodiments of the present invention are described in detail with respect to the following figures in which:

Figure 1 shows a constellation for the 16QAM modulation.
Figure 2 shows a block diagram of a transmitter using an ACE technology according to the state of the art.

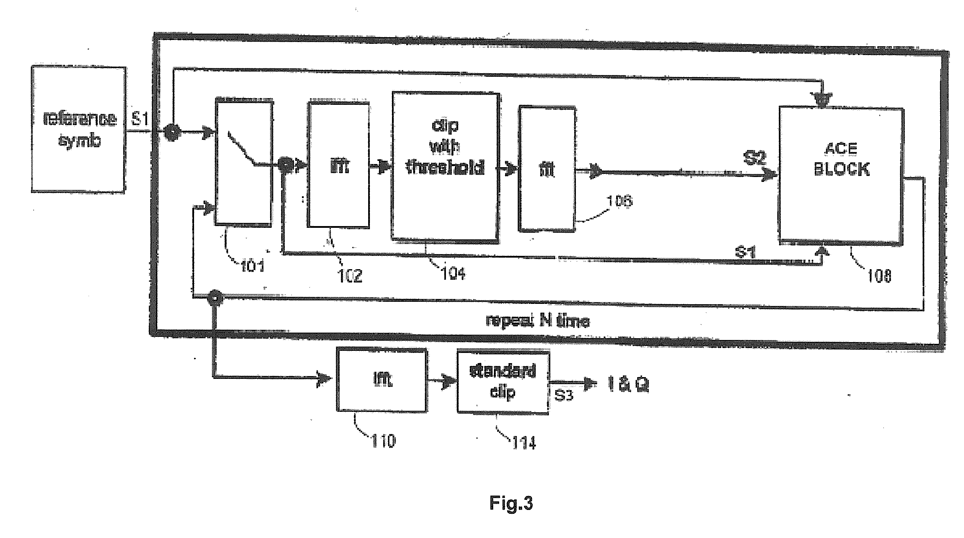

Figure 3 shows a block diagram of a transmitter using an ACE technology according to the invention.
Figure 4 shows a diagram of the result of the PAPR reduction using an ACE technology according to the invention.
Figure 5 shows a diagram of the result of the PAPR reduction by adjusting the non modulated carriers.

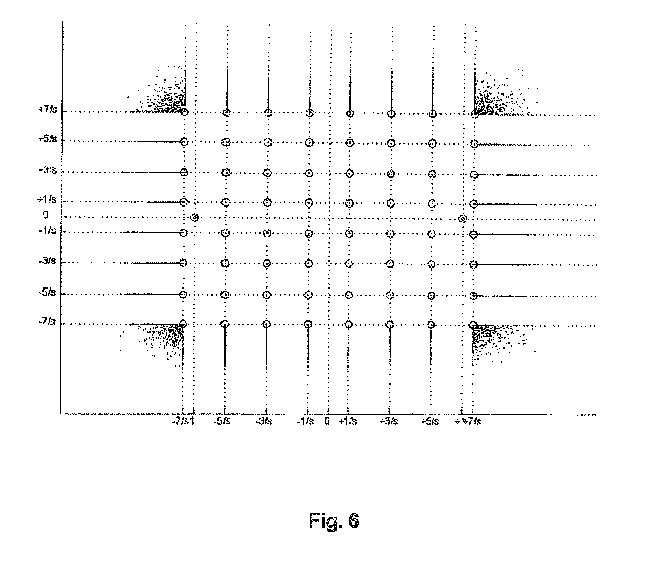

Figure 6 shows a constellation for the 64 QAM modulation using an ACE technology according to the invention.

The ACE transmitter comprises a switch 101 to transmit the data symbol source S1 to a first Inverse Fast Fourier Transformer (IFFT) 102, so transforming the source S1 in a time domain signal. An output of the IFFT is coupled to a clipping block 104 with a fixed threshold value, having an output coupled to a Fast Fourier Transformer (FFT) 106. The time domain signal is first clipped and retransformed in a frequency spatial domain signal S2.

An ACE constraint block 108 permits to restore all interior points in order to preserve the minimum distance between the constellation symbols while projecting exterior points to a region of increased margin. The calculation of the projection vector for each point is depending from the gain of the signal S2 -S1. S1 and S2 are signals in the frequency spatial domain. The use of frequency spatial domain signals simplifies the calculation of the projection vectors.

The output of this block 108 is afterward connected to a second IFFT 110 giving a set of time domain samples. These samples are then quadrature mixed to passband in a standard way.

The ACE transmitter comprises a feed back loop connecting the output of the block 108 with the input of the first IFFT 102, when the switch 101 is appropriately switched, so permitting n iterations of the calculation of the projection vectors.

To improve the signal, a standard clipping circuit 112 could be connected to the output of the second IFFT. Thus, the oversampled time signal provided by the second IFFT is clipped.

This ACE concept will consider the gain, not in temporal domain but in spatial domain. This concept, based on the gain of the difference of the signals S2 and S1 of the spatial domain, is particular to the invention.

An iteration of the step corresponding to the feed back loop is made if, in the extension direction, the extension coefficient is not acceptable until the measured PAPR at the output of a second IFFT 110 connected to the output of the block 108 reaches a predetermined value. The number N of Iteration is depending of the variation or the improvement capacity of this value. With the ACE device of the invention, only one iteration is necessary to reach the value. Further iterations provide a small additional gain, basically unnecessary.

The performance evaluation is conduced in terms of PAPR reduction, energy distribution, BER at the receiver.

It is customary to use the CCDF (Complementary Cumulative Distribution Function) of the PAPR as a performance criterion. The CCDF of the PAPR is defined as the probability that the PAPR per OFDM symbols exceeds a certain clipping level.

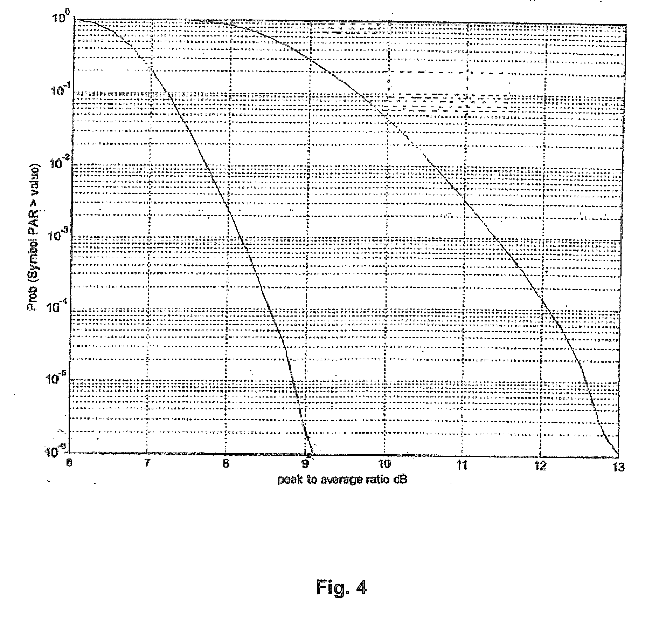

The CCDF in Fig. 4 gives a good approximation of the maximum gain that can be obtained in the case of PAPR reduction.

Fig 4 shows the result of the PPAR reduction. From right to left, the original PAPR is shown followed by the PAPR with the proposed ACE after one iteration. A large PAPR reduction is achieved. For a Prob (symbol PAPR >value) of $10^{-6}$ a PAPR of 9dB is measured. A reduction of approximately 4dB is reached and that is the attractive feature of the proposed algorithm.

A second or a third iteration does provide a small additional gain, basically unnecessary.

After transforming back into time domain, the coefficient of the extension vector is determined by the block 108. In fact, the inter-modulation distortion caused by clipping introduces noise into the symbol vector. This distortion cannot be entirely eliminated. Preferentially, significant distortion introduced by the signal clipping process is removed by applying a mask. In order to allow only certain extension directions, the clipped signal is transformed into the frequency domain using the FFT 106 and unwanted extensions direction are set to zero in the ACE block 108.

After application of technique ACE described in the first part, a unit representing the wide constellation of symbol OFDM is obtained. Thus $C_k'$ represents the component of each carrying $C_k$ after the application technique ACE.

A periodic function of period T for which the index K represents the number of symbol OFDM and the index J the index of sub carriers carrying the function f called function mask must be defined such as

$$(1) f(k,j) = f(k+T,j)$$

(2) Two complementary subsets $S$ of size k and $S'$

of size N-k are defined such as

$$\forall j \in S, f(j) = 1$$

$$\forall j \in S', f(j) = 0$$

A vector $C''_K$ is defined such as $C''_K = C'_K$ with $f(k,j)=1$ and $C''_K = C_K$ with $f(k,j) = 0$

The function mask transforms the extension vector C' into an extension vector C'' which makes it possible to maintain certain carrying without technique ACE. The receiver will be able to thus use in an optimal way carrying the non-extend ones in order not to disturb its equalization and its measurement of noise.

Furthermore, while respecting the mask signal criticizes, it is still possible to improve the PAPR by adjusting the non modulated carriers.

Indeed for example, if the simulated system employs an OFDM signal with N = 256 sub-carriers, among which 192 data carriers (QPSK, 16QAM or 64QAM signal mapping), 8 pilots (BPSK modulation), 1 DC and 55 guard carriers (28 lower and 27 upper frequency guard sub-carriers). The 55 guard carriers are non modulated sub-carriers.

By another example in a DVBT-2K mode, the system employs an OFDM signal with 2048 sub-carriers among which 1705 are data sub-carriers. The guard carriers or non modulated sub-carriers are 300.

By an other example in a DVBT-8K mode, 6817 on 8192 possible sub-carriers are data carriers, More than 1000 sub-carriers are possible non modulated sub-carriers.

When the signal is clipped, the effect on the complete constellation of guard carriers is a group of dots centred on 0. This group of dots can be preserved by forcing it, in order to avoid having too much noise on the spectrum. This group of dots can then be regarded as an extension of points as with the ACE technique, but here, the whole of this group contributes to the PAPR and can be kept because it does not contain a useful signal.

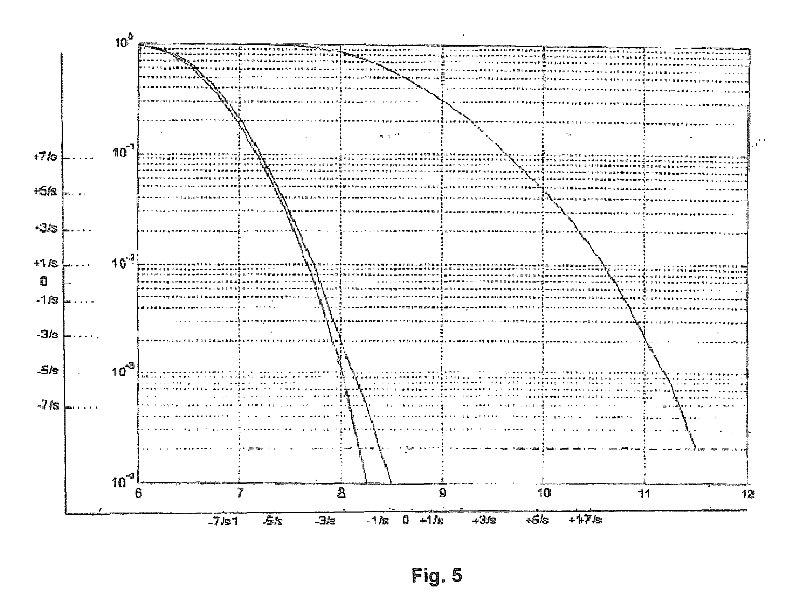

As shown on the figure 5, from right to left, the original PAPR is shown followed by the PAPR in a DVBT-2K mode and in a DVBT-8K mode. With the last proposed ACE, the PAPR in a DVBT-2K mode is additionally reduced of 0,2 to 0,5dB. In a DVBT-8K mode, the PAPR is improved of more than 0,5dB.

The concept of specific ACE techniques as disclosed with this invention are applicable to Multiple Input Multiple Output (MIMO) OFDM system.

## Claims

1. Apparatus for reducing peak to average power ration PAPR in an OFDM signal comprising subcarriers using an Active Constellation Extension ACE technique comprising:

   - Means for transforming the input frequency signal S1 in a first time domain signal;
   - Means for first clipping with a predetermined threshold value the temporal signal in a first clipped signal ;
   - Means for transforming the first clipped signal in a second frequency spatial domain signal S2 ;
   - Means for determining the gain between the frequency spatial domain signal S2 and the input frequency signal S1 ;
   - Means for projecting the exterior points of the constellation representing the second frequency spatial domain signal S2 in others exterior points ;
   - Means for transforming back the signal to a second time domain signal S3.

2. Apparatus as claimed in claim 1, **characterized in that** it comprises furthermore means for second clipping the signal S3 to be transmitted.

3. Apparatus as claimed in claim 1, **characterized in that** the means for projecting the exterior points of the constellation representing the second frequency signal S2 in others exterior points are depending of the gain between the second frequency signal S2 and the input frequency signal S1.

4. Apparatus as claimed in claim 1, **characterized in that** the means for projecting the exterior points of the constellation representing the second frequency signal S2 in others exterior points are depending of a periodic mask function for which a part of the points are maintaining in a non extending function.

5. Apparatus as claimed in claim 1, the OFDM signal comprising data subcarriers and guards subcarriers, **characterized in that** the means for projecting the exterior points of the constellation representing the second frequency signal S2 in others exterior points is active for a group of dots representing the guard subcarriers.

6. Method of reducing peak to average power ration PAPR of an OFDM signal using an Active Constellation Extension ACE technique, comprising the steps of:

   - Assigning to a frequency spatial domain input signal S1 spectral values and mapping the values onto signal space constellation points ;
   - Determining between the points corresponding to symbols, the interior points, the exterior points and the allowable extension directions for each symbol or the region of increased margin ;
   - Reconstructing the time domain signal by the inverse FFT applied to each symbol and clipping with a fixed threshold the corresponding signal ;
   - Computing the signal in a frequency spatial domain signal S2 by applying an FFT to each clipped signal;
   - Keeping all interior points to their values ;
   - Projecting the exterior points with a projecting parameter into the region of increased margin.

7. Method of reducing peak to average power ration PAPR as claimed in claim 6 **characterized in that** the projecting parameter depend of the difference between the second frequency spatial domain signal S2 to the frequency spatial domain input signal S1.

8. Method of reducing peak to average power ration PAPR as claimed in claim 6 **characterized in that** the projecting parameter depend of a periodic mask function for which a part of the exterior points are maintaining in a non extendable function.

9. Method of reducing peak to average power ration PAPR of an OFDM signal comprising data subcarriers and guard subcarriers as claimed in claim 6 **characterized in that** the projecting parameters are active for points representing the guard subcarriers.

Fig. 1

Fig. 2

Fig.3

Fig. 4

Fig. 5

10

Fig. 6

European Patent
Office

**EUROPEAN SEARCH REPORT**

Application Number

EP 06 12 6030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "An Adaptive-Scaling Algorithm for OFDM PAR Reduction Using Active Constellation Extension" VEHICULAR TECHNOLOGY CONFERENCE, September 2006 (2006-09), pages 1-5, XP002429733 Retrieved from the Internet: URL:http://ieeexplore.ieee.org/iel5/410926 4/4109265/04109613.pdf?tp=&isnumber=410926 5&arnumber=4109613> [retrieved on 2007-04-17] * section: B. Active Constellation Technique * * section C. Clipping-based Algorithm * | 1-3,6,7 | INV. H04L27/34 H04L27/26 |
| Y | | 4,5,8,9 | |
| X | JONES D L: "Peak power reduction in OFDM and DMT via active channel modification" SIGNALS, SYSTEMS, AND COMPUTERS, vol. 2, 24 October 1999 (1999-10-24), - 27 October 1999 (1999-10-27) pages 1076-1079, XP010373802 IEEE, PISCATAWAY, NJ, USA ISBN: 0-7803-5700-0 * section 3 * * page 1077, column 2, paragraph 3 * | 6 | |
| X,D | KRONGOLD B S ET AL: "PAR reduction in OFDM via active constellation extension" IEEE TRANSACTIONS ON BROADCASTING, vol. 49, no. 3, September 2003 (2003-09), pages 258-268, XP002303893 IEEE SERVICE CENTER, PISCATAWAY, NJ, US ISSN: 0018-9316 * page 262, column 1 * * figure 2 * | 6 | |

TECHNICAL FIELDS
SEARCHED (IPC)

H04L

-/--

The present search report has been drawn up for all claims

| Place of search | Date of completion of the search | Examiner |
|---|---|---|
| The Hague | 18 April 2007 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 06 12 6030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/169411 A1 (KROEGER BRIAN W [US]) 4 August 2005 (2005-08-04) * page 4, paragraph 43 - paragraph 46 * * page 6, paragraph 68 - paragraph 70 * * figure 5 * ----- | 4,5,8,9 | |
| A | "An Analysis of OFDM Peak Power Reduction Techniques for WiMAX Systems" vol. 10, June 2006 (2006-06), pages 4676-4681, XP002429734 ISSN: 7 Retrieved from the Internet: URL:http://ieeexplore.ieee.org/iel5/402407 4/4024712/04024776.pdf?tp=&isnumber=402471 2&arnumber=4024776&punumber=4024074> [retrieved on 2007-04-17] * page 4677, column 1, last paragraph - column 2, paragraph 1 * * page 4678, column 1, paragraph 3 * * figure 1 * ----- | 1,6 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 18 April 2007 | Moreno, Marta |

## ANNEX TO THE EUROPEAN SEARCH REPORT
## ON EUROPEAN PATENT APPLICATION NO.

EP 06 12 6030

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2007

| Patent document cited in search report | Publication date | Patent family member(s) | Publication date |
|---|---|---|---|
| US 2005169411 A1 | 04-08-2005 | AR 047381 A1<br>AU 2005211103 A1<br>CA 2553192 A1<br>CN 1914871 A<br>EP 1712051 A1<br>KR 20060130160 A<br>MX PA06008630 A<br>WO 2005076560 A1 | 18-01-2006<br>18-08-2005<br>18-08-2005<br>14-02-2007<br>18-10-2006<br>18-12-2006<br>04-09-2006<br>18-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005096579 A

**Non-patent literature cited in the description**

- **B. S. KRONGOLD ; D.L. JONES.** PAR reduction in OFDM via Active Constellation Extension. *IEEE Transactions on Broadcasting,* September 2003, vol. 49 (3), 258-268

- **B. KRONGOLD.** Fast Active Constellation extension for MIMO-OFDM PAR reduction. IEEE, 2005